Europäisches Patentamt

European Patent Office

Office européen des brevets

(19)

(11) **EP 0 891 886 B1**

(12) **EUROPEAN PATENT SPECIFICATION**

(45) Date of publication and mention
of the grant of the patent:
**26.06.2002 Bulletin 2002/26**

(51) Int Cl.⁷: **B60K 5/12**, B60K 5/04,
B60K 17/06, F16F 15/04

(21) Application number: **97917417.4**

(22) Date of filing: **17.04.1997**

(86) International application number:
**PCT/JP97/01328**

(87) International publication number:
**WO 97/39908 (30.10.1997 Gazette 1997/46)**

(54) **METHOD OF SUPPORTING ASSEMBLY OF ENGINE AND TRANSMISSION ON CAR BODY, AND SUPPORT STRUCTURE OF THE ASSEMBLY**

VERFAHREN ZUR ABSTÜTZUNG EINER MOTOR-GETRIEBE-BAUEINHEIT AM FAHRZEUGKÖRPER UND TRAGSTRUKTUR FÜR BAUEINHEIT

METHODE PERMETTANT A LA CARROSSERIE D'UNE VOITURE DE SUPPORTER L'ENSEMBLE MOTEUR ET TRANSMISSION ET STRUCTURE DE SUPPORT DE L'ENSEMBLE

(84) Designated Contracting States:
**DE FR GB**

(30) Priority: **23.04.1996 JP 12398296**

(43) Date of publication of application:
**20.01.1999 Bulletin 1999/03**

(73) Proprietor: **TOYOTA JIDOSHA KABUSHIKI KAISHA**
**Aichi-ken 471-8571 (JP)**

(72) Inventors:
 • **NOZAWA, Takashi**
  **Shizuoka-ken 410-1107 (JP)**

 • **KIMURA, Tadashi**
  **27-14, Senpukugaoka 2-chome**
  **Shizuoka-ken 410-11 (JP)**
 • **YAMAMOTO, Katsuhiko**
  **Shizuoka-ken 410-11 (JP)**
 • **KITAGAWA, Hiroki**
  **Kanagawa-ken 243-04 (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
 **JP-A- 59 167 327**     **JP-U- 63 133 408**
 **US-A- 5 454 443**

## EP 0 891 886 B1

**Description**

Method and structure of Supporting an Assembly of an Engine and a Transmission on a Vehicle Body.

FIELD OF ART

This invention relates to a method of supporting an assembly of an engine and a transmission of an automobile, in particular a passenger car, on a vehicle body and to a structure for supporting the assembly.

BACKGROUND OF ART

As for a structure for supporting an assembly of an engine and a transmission of a passenger car on the vehicle body through a plurality of mounts, there is a structure disclosed in document JP-U-63-133 408, wherein an equilateral triangle is imaged on a plane passing through the center of gravity of the engine and including a principal axis of inertia, the equilateral triangle having the center of gravity as its center and the structure having one side of the equilateral triangle disposed parallel to the principal axis of inertia, with the mounts placed in the neighborhood of the vertices of the equilateral triangle. There is another structure disclosed in document JP-A-59-167 327 wherein rubber cushions are placed on a principal axis of inertia relative to a rolling movement of an assembly of an engine and a transmission as well as on the principal axis of inertia relative to a pitching movement.

A vibration phenomenon of an assembly of an engine and a transmission, particularly a low-frequency vibration phenomenon, is greatly influenced by the characteristic value or the proper mode of the assembly, the characteristic value or the proper mode being determined by an item of inertia, the positions of the mounts and spring constants of the mounts. Here, suppose the item of inertia is given by the vehicle body, parameters given by considering vibration for supporting the assembly on the vehicle body are the positions of the mounts and the spring constants of the mounts, while only the positions of mounts are proposed for both supporting structures described in the above-mentioned official gazettes.

On the other hand, as a result of analysis of the vibration phenomenon, the vibration phenomenon caused to the assembly and means to cope with this vibration phenomenon are as follows: with respect to the vibration phenomenon of a low-frequency engine shake due to an irregular combustion, the upward and downward vibration of the engine and the vibration in the pitching direction of the engine respectively applied to the assembly are coupled; with respect to the engine wind-up vibration phenomenon caused at the time of acceleration and deceleration and a low-frequency idling vibration phenomenon due to an irregular combustion, the vibration in the width direction of the engine and the vibration in the rolling direction of the engine respectively applied to the assembly are not coupled and, furthermore, the vibration in the upward and downward direction of the engine and the vibration in the rolling direction of the engine respectively applied to the assembly are not coupled. However, the supporting structure described in the JP-A-59-167327 does not synthetically cope with the vibration phenomenon caused to the assembly.

A method comprising the features of the pre-characterizing clause of claim 1 is known from document US-A-5 454 443. This document also discloses a structure of supporting an assembly of an engine and a transmission on a vehicle body by three mounts comprising the features of the pre-characterizing clause of claim 5. According to this known method and structure, the mounts have a characteristic which determines a high natural frequency of the vibration in the rolling direction of the assembly and is modulated precisely to the torsion of the vehicle body and has a low stiffness of the mounts in the upward and downward direction.

DISCLOSURE OF THE INVENTION

It is an object of the present invention to provide a method of supporting an assembly of an engine and a transmission capable of properly determining the positions of mounts and spring constants in supporting the assembly of the engine and the transmission on a vehicle body through a plurality of mounts.

It is a further object of the present invention to provide a structure for supporting an assembly of an engine and a transmission comprising means for synthetically coping with a vibration phenomenon caused by the assembly of the engine and the transmission.

The first-mentioned object is achieved by the method according to claim 1.

The three mounts recited in claim 1 are preferably placed at positions so that $h_1 + h_2 + h_3 = 0$, and $l_1 + l_2 + l_3 = 0$ are satisfied.

The three mounts are arranged in a plane passing through the center of gravity or its neighborhood so that the center of gravity of the assembly is positioned within a triangle formed by the three mounts. This arrangement can be deduced from a simplified model of vibration of three degrees of freedom, supposing two mounts and the center of gravity are within one plane and a rotational vibration about the center of gravity and a translating vibration are applied

EP 0 891 886 B1

to the mounts.

While five simultaneous equations are obtained from the three formulae recited in claim 1 there are more variables than these. Therefore, some binding conditions required for an automobile are to be given. For example, since the arrangement of the assembly of the engine and the transmission is determined physically by an engine room of a vehicle body and the positions of the mounts are determined substantially, it is possible to obtain from the three formulae recited in claim 1 how the spring constants of the mounts are preferably determined when these positions are maintained constant. On the contrary, it is possible to determine the positions of the mounts from the three formulae recited in claim 1 by giving such conditions as equalizing the spring constants of the three mounts respectively in the forward and backward direction and the width direction of the engine, or making the spring constants of all the mounts in the same direction constant.

The above-mentioned second object is achieved by the structure according to claim 5.

Preferred developments of the structure according to the invention are defined in claims 6, 7 and 8.

According to the present invention, the following effect can be obtained:

According to the supporting method of the present invention, since the center of gravity of the assembly is substantially within the same plane as the three mounts and within the triangle formed by the three mounts, requirements for restricting a generation of translation of the assembly are satisfied even if a rotating vibration about the center of gravity of the assembly occurs. In addition, from expressions of equilibrium according to the three formulae recited in claim 1 requirements for the positions of the mounts and the spring constants to satisfy the matrix shown in Table 1 (contained in the following description of the most preferred embodiments) can be obtained. Thereby, the positions of the three mounts and the spring constants can be selected to be optimum.

When the three mounts are disposed in such positions as $h_1 + h_2 + h_3 = 0$, and $l_1 + l_2 + l_3 = 0$ are satisfied, the spring constants of the three mounts can be made equal.

According to the supporting structure of the present invention, a supporting structure with the positions and the spring constants of three or four mounts selected to be optimum can be provided. This supporting structure enables synthetically coping with the vibrations applied to the assembly when the assembly of the engine and the transmission is supported on the vehicle body. In other words, it is possible to design, taking into account the vehicle body sensitivity, the rigidity of brackets attaching the mounts, the configurations of the mounts and so on.

In case the structure is designed according to claim 6, it is possible to restrain upward and downward force due to rotation of a crankshaft from being inputted to the mounts. Consequently, it is favorable to a vehicle body having comparatively low vertical rigidity.

The assembly, when to be installed in the front portion of the vehicle body such that the rotational axis of the crankshaft of the engine extends in the width direction of the vehicle body, is installed in the front portion of the vehicle body such that the principal axis of inertia extends in the width direction of the vehicle body. It becomes, therefore, possible to install the assembly in the neighborhood of a node of a bending mode of the vehicle body. This signifies that an input point of vibration from the engine to the vehicle body is a position where the vehicle body is hard to vibrate, and it is advantageous especially for idling vibration.

When the structure is designed according to claim 8 preference is given to coping with specific one of some vibration phenomena. Namely, the supporting structure of the present invention enables to synthetically cope with the vibrations applied to the assembly, but when the specific vibration is not sufficiently coped with, it is possible to take more effective measures against vibration by selecting the position of the plane passing through the center of gravity of the assembly. For example, when idling vibration is to be regarded as important, the plane is brought close to the vertical plane including the torque roll axis, while in other cases the plane is brought close to the vertical plane including the principal axis of inertia.

BRIEF DESCRIPTION OF THE DRAWINGS:

Fig. 1 is a simplified model view of vibration of three degrees of freedom used in working a method of supporting the assembly of an engine and a transmission according to the present invention.

Fig. 2 is a perspective view showing the assembly of the engine and the transmission.

Fig. 3 is a rear elevation of the assembly shown in Fig. 2, with the dimensions from the center of gravity to three mounts added.

Fig. 4 is a side view of the assembly shown in Fig. 2, with the dimensions from the center of gravity to three mounts added.

Fig. 5 is a perspective view of an embodiment of the structure for supporting the assembly of the engine and the transmission according to the present invention with slanting lines added to a plane.

Fig. 6 shows another embodiment of the structure for supporting the assembly of the engine and the transmission according to the present invention, of which (A) is a side view, (B) a plan view, and (C) a perspective view, with slanting lines added to a plane.

Fig. 7 shows still another embodiment of the structure for supporting the assembly of the engine and the transmission according to the present invention, of which (A) is a side view and (B) a plan view, with slanting lines added to a plane.

Fig. 8 is a plan view of still another embodiment of the structure for supporting the assembly of the engine and the transmission according to the present invention.

Fig. 9 is a schematic view showing a bending mode exerted to an automobile.

## MOST PREFERRED EMBODIMENTS FOR WORKING THE INVENTION

In working the method of supporting the assembly of an engine and a transmission, three mounts each having spring functions in the forward and backward direction, the width direction, and the upward and downward direction of the engine are disposed in the plane passing through the center of gravity of the assembly or its neighborhood, and besides, the center of gravity is positioned in the triangle formed by the three mounts. The above-mentioned disposition of the center of gravity was obtained in the following manner.

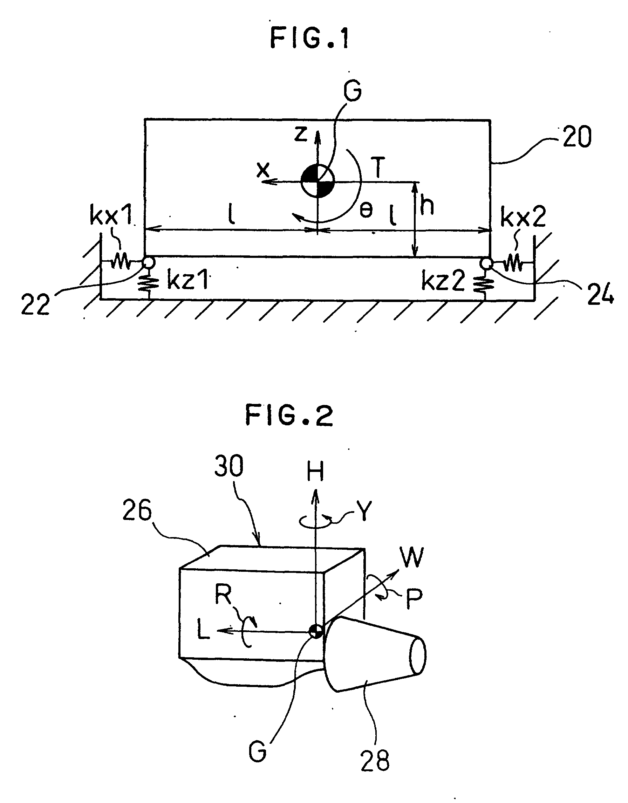

A vibration phenomenon, particularly a low frequency vibration phenomenon is greatly influenced by the characteristic value and the proper mode of the assembly, and the characteristic value and the proper mode are determined by an item of inertia of an engine, the positions of the mounts and the formula of the spring constant of the mounts. In this case, suppose the item of inertia is given by the automobile, parameters are the positions of the mounts and the spring constants of the mounts. So, let's consider such a simplified model of three degrees of freedom as shown in Fig. 1. Suppose a vibration member 20 is supported by two mounts 22, 24, and the center of gravity G is in the center of the length 2l in the $x$ direction and in $h$ in the $z$ direction to be rotationally vibrated upon receipt of torque T. Suppose the moment of inertia of the vibration member 20 is $I$, the mass is $m$, the spring constants of the mounts 22, 24 in the $x$ direction are $kx_1$, $kx_2$, and the spring constants in the $z$ direction are $kz_1$, $kz_2$, the following equations of motion can be obtained.

$$m\ddot{x} = -kx_1(x+\theta h') - kx_2(x+\theta h') \qquad (\text{Formula 4})$$

$$m\ddot{z} = -kz_1(z+\theta l') - kz_2(z-\theta l') \qquad (\text{Formula 5})$$

$$I\ddot{\theta} = -kx_1 h'(x+\theta h') - kx_2 h'(x+\theta h') - kz_1 l'(z+\theta l') \qquad (\text{Formula 6})$$
$$+ kz_2 l'(z-\theta l') + T$$

Also, h' and l' in the (Formula 4, Formula 5) and (Formula 6) are as follows:

$$h' = (l^2+h^2)^{1/2} \sin\{\tan^{-1}(h/l)\} \qquad (\text{Formula 7})$$

$$l' = (l^2+h^2)^{1/2} \cos\{\tan^{-1}(h/l)\} \qquad (\text{Formula 8})$$

When (Formula 4), (Formula 5) and (Formula 6) are solved with respect to $x$, the following formula is obtained:

$$x/T = \frac{-(kx_1+kx_2)h'}{(ms^2+kx_1+kx_2)\{(Is^2+(kx_1+kx_2)h'^2+(kz_1+kz_2)l'^2\}-h'^2(kx_1+kx_2)^2}$$

(Formula 9)

Incidentally, $\underline{s}$ in (Formula 9) is Laplacean. Therefore, since $kx_1 + kx_2$ is larger than zero, the condition for not vibrating in the $\underline{x}$ direction relative to an input of the rotational torque T is h' = 0, so that h = 0 is obtained from (Formula 7), which means that the center of gravity G is positioned on the straight line connecting the two mounts 22, 24. Since (Formula 9) holds good for arbitrary two of the three mounts, the condition for not performing a translational vibration due to the rotational torque applied to the center of gravity G of a vibration member 20 when the vibration member 20 is supported by the three mounts is, after all, that the center of gravity of the vibration member 20 should be on a plane formed by the three mounts and enclosed by the three mounts.

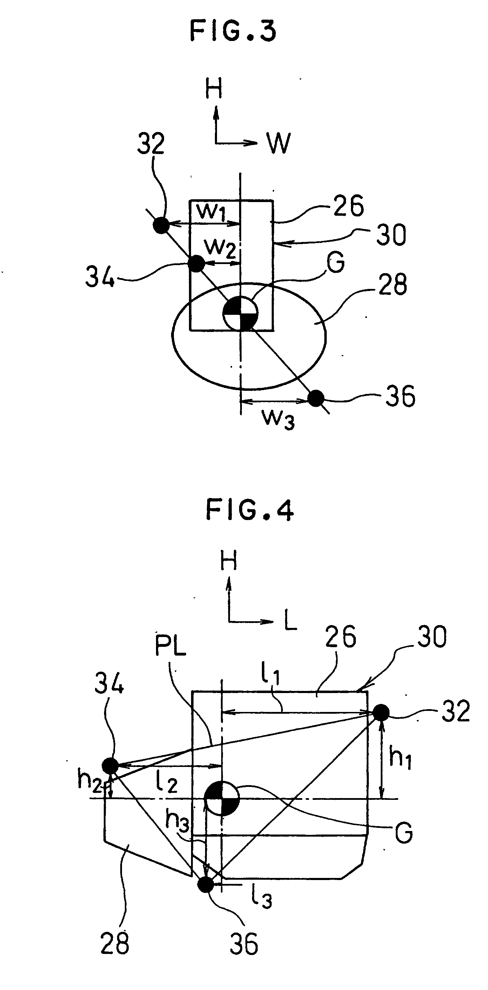

On the premise that the center of gravity G of an assembly 30 of an engine 26 and a transmission 28 and three mounts 32, 34, 36 are disposed on the plane, and that the center of gravity G is positioned within the triangle formed by the three mounts, the positions of the three mounts and the spring constant equations of the three mounts are then determined. As shown in Fig. 2 through Fig. 4, it is determined with respect to the three mounts 32, 34, 36 that the vibration in the forward and backward direction L of the engine and the vibration in the pitching direction P of the engine are not coupled; the vibration in the forward and backward direction L of the engine and the vibration in the yawing direction Y of the engine are not coupled; the vibration in the width direction W of the engine and the vibration in the rolling direction R of the engine are not coupled; vibration in the width direction W of the engine and the vibration in the yawing direction Y of the engine are not coupled; the vibration in the upward and downward direction H of the engine and the vibration in the pitching direction P of the engine are coupled; and the vibration in the upward and downward direction H of the engine and the vibration in the rolling direction R of the engine are not coupled. This is summarized in the matrix of the following Table 1.

TABLE 1

|  | W | L | H | PITCHING | ROLLING | YAWING |
|---|---|---|---|---|---|---|
| W |  |  |  |  |  |  |
| L | — |  |  |  |  |  |
| H | — | — |  |  |  |  |
| PITCHING | — | O | ● |  |  |  |
| ROLLING | O | O | O | — |  |  |
| YAWING | O | O | — | — | — |  |

●: BETTER TO BE COUPLED

O: BETTER NOT TO BE COUPLED

—: EITHER WILL DO

Let's indicate the positions of the mount 32 in the forward and backward direction L, the width direction W and the upward and downward direction H of the engine relative to the center of gravity G as $(l_1, w_1, h_1)$, the positions of the mounts 34 in the respective directions as $(l_2, w_2, h_2)$, and the positions of the mounts 36 in the respective directions as $(l_3, w_3, h_3)$. Further, let's indicate the spring constants of the mount 32 in the forward and backward direction L, the width direction W and the upward and downward direction H of the engine as $(kl_1, kw_1, kh_1)$, the spring constants of the mount 34 in the respective directions as $(kl_2, kw_2, kh_2)$, and the spring constants of the mount 36 in the respective directions as $(kl_3, kw_3, kh_3)$. In order that the three mounts 32, 34, 36 satisfy the Table 1, at least the following formulae should be satisfied in view of the balance in each direction.

$$\begin{bmatrix} l_1 & l_2 & l_3 \\ h_1 & h_2 & h_3 \end{bmatrix} \begin{bmatrix} kw_1 \\ kw_2 \\ kw_3 \end{bmatrix} = 0 \qquad \text{(Formula 1)}$$

$$\begin{bmatrix} w_1 & w_2 & w_3 \\ h_1 & h_2 & h_3 \end{bmatrix} \begin{bmatrix} kl_1 \\ kl_2 \\ kl_3 \end{bmatrix} = 0 \qquad \text{(Formula 2)}$$

$$\begin{bmatrix} w_1 & w_2 & w_3 \end{bmatrix} \begin{bmatrix} kh_1 \\ kh_2 \\ kh_3 \end{bmatrix} = 0 \qquad \text{(Formula 3)}$$

From these (Formula 1), (Formula 2) and (Formula 3), the positions and the spring constants of the mounts 32, 34, 36 can be determined.

The condition to make the spring constants of the three mounts equal while satisfying (Formula 1), (Formula 2) and (Formula 3) is to dispose the three mounts in such positions as

$h_1 + h_2 + h_3 = 0$, and $l_1 + l_2 + l_3 = 0$

are established.

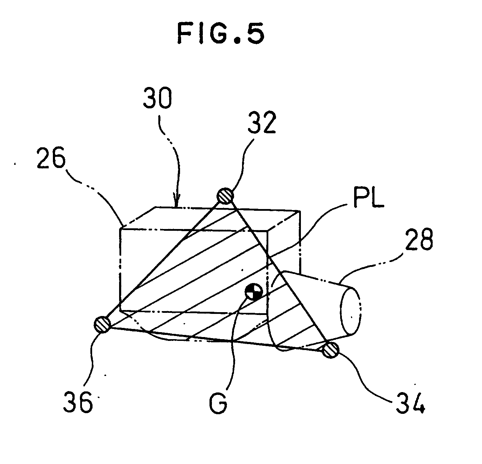

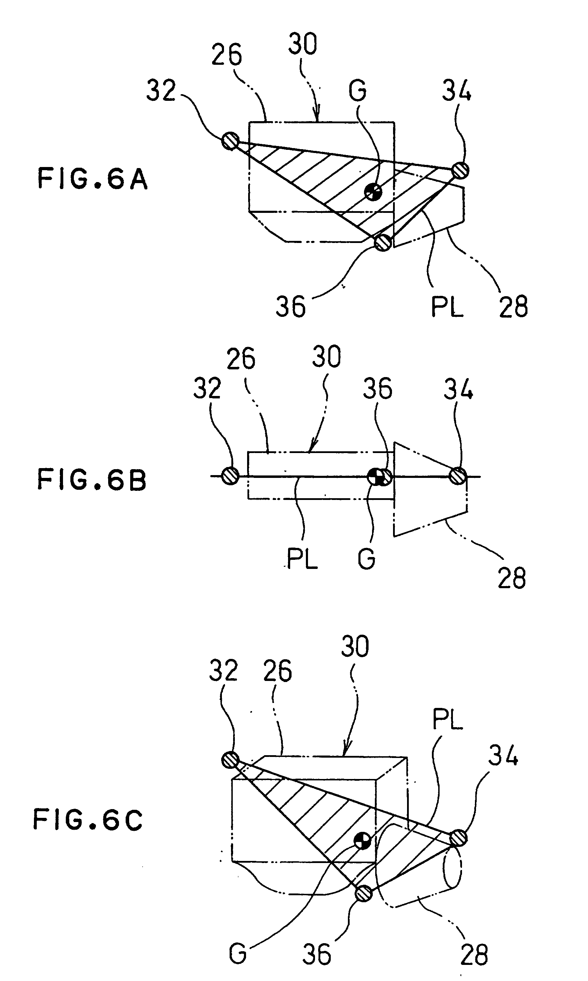

It is necessary to dispose the mounts 32, 34, 36, as shown in Fig. 5, such that the center of gravity G of the assembly 30 and the respective centers of the three mounts 32, 34, 36 are placed on a plane PL and that the center of gravity G is placed within the triangle formed by the three mounts 32, 34, 36. It is, however, possible to place the neighborhood of the center of gravity on the plane PL in case the center of gravity G and the centers of the three mounts, respectively, cannot be strictly placed on the plane PL due to restrictions in placement and others. The same applies to the following embodiments. As far as the above conditions are satisfied, the two mounts 34, 36 may be placed below the center of gravity G with one mount 32 placed above the center of gravity G as shown in Fig. 5, or the two mounts 32, 34 may be placed above the center of gravity G with one mount 36 placed below the center of gravity G as shown in Fig. 6.

Since (Formula 9) holds good relative to arbitrary two mounts, it can be also applied as a matter of course to a case where four mounts in total support the vibration member 20. Consequently, when four mounts support the vibration member 20, the condition for not performing a translating vibration by a rotational torque applied to the center of gravity G of the vibration member 20 is that the center of gravity G of the vibration member 20 is on a plane formed by the four mounts and is enclosed by the four mounts.

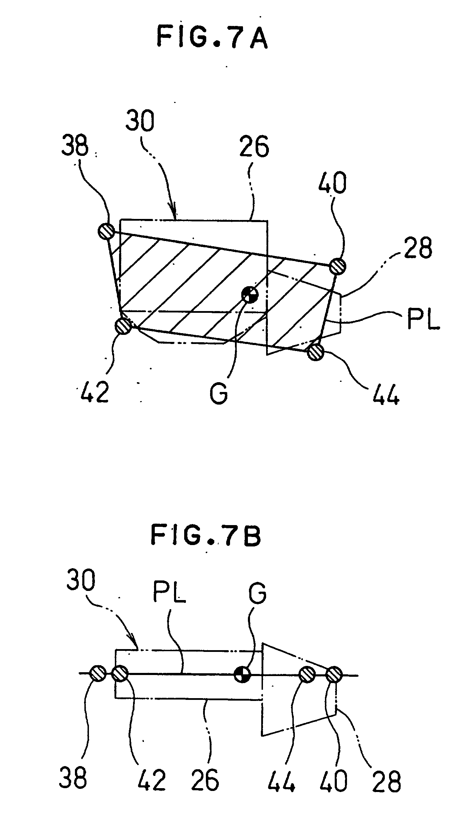

As a result, as shown in Fig. 7, a structure for supporting an assembly 30 by four mounts 38, 40, 42, 44 can be obtained. It is necessary that the four mounts 38, 40, 42, 44 be placed such that the center of gravity G of the assembly 30 and the respective centers of the four mounts 38, 40, 42, 44 are placed on the plane PL and, further, that the center of gravity G is placed within a quadrangle formed by the four mounts 38, 40, 42, 44. In such a case, an arrangement where the two mounts 38, 40 come above the center of gravity G while the two mounts 42, 44 come below the center of gravity G is convenient.

As shown in Fig. 6(B) or Fig. 7(B), preferably, the plane PL passing through the center of gravity G of the assembly 30 substantially coincides with the vertical plane including the principal axis of inertia of the engine.

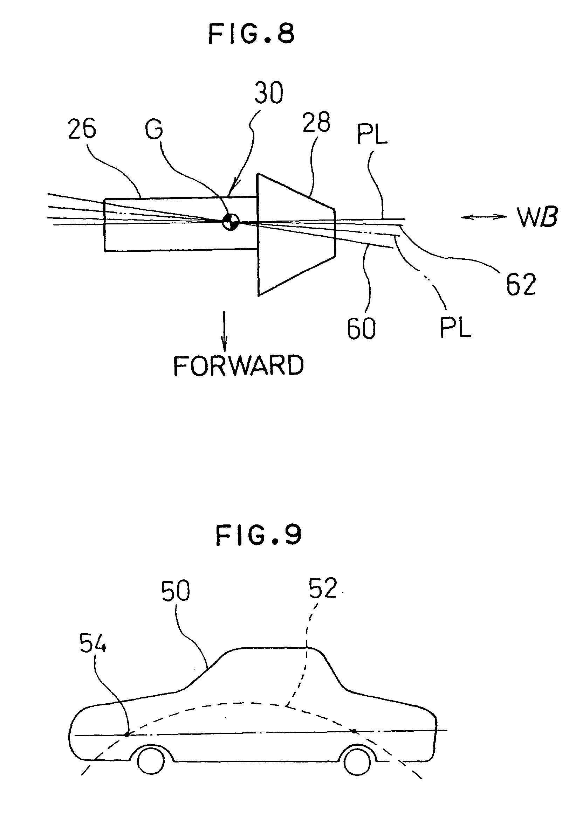

When the plane PL passing through the center of gravity G of the assembly 30 substantially coincides with the vertical plane including the principal axis of inertia, it is preferable that, as shown in Fig. 8, the assembly 30 be installed in the front portion of the vehicle body so that the rotational axis of the crankshaft of the engine may extend in the width direction WB of the vehicle body. It is a horizontal placement of the assembly 30, and when the vehicle body 50 is vibrated by such a bending mode 52 as shown in Fig. 9, the node 54 of vibration comes near the installation position of the assembly 30.

The plane PL passing through the center of gravity G of the assembly 30 can be selected to be placed between the vertical plane including the principal axis 60 of inertia of the moment of inertia of the assembly 30 as viewed in the direction of the principal axis of inertia of the engine, that is, as viewed in the width direction WB in Fig. 8 and the vertical plane including the torque roll axis 62 of the assembly 30.

**Claims**

1.  A method of supporting an assembly (30) of an engine (26) and a transmission (28) on a vehicle body (50) by disposing three mounts (32, 34, 36) each having spring functions in the forward and backward direction, (L) the width direction (W) and the upward and downward direction (H) of said engine (26) within a plane (PL) passing through the center of gravity (G) of said assembly (30) or its neighborhood and by placing said center of gravity (G) within the triangle formed by said three mounts to support said assembly (30), **characterized by**
    determining the positions of said three mounts (32, 34, 36) and spring constants so as to satisfy the following three formulae

$$\begin{bmatrix} l_1 & l_2 & l_3 \\ h_1 & h_2 & h_3 \end{bmatrix} \begin{bmatrix} kw_1 \\ kw_2 \\ kw_3 \end{bmatrix} = 0$$

$$\begin{bmatrix} w_1 & w_2 & w_3 \\ h_1 & h_2 & h_3 \end{bmatrix} \begin{bmatrix} kl_1 \\ kl_2 \\ kl_3 \end{bmatrix} = 0$$

$$\begin{bmatrix} w_1 & w_2 & w_3 \end{bmatrix} \cdot \begin{bmatrix} kh_1 \\ kh_2 \\ kh_3 \end{bmatrix} = 0$$

    where the positions of said three mounts (32, 34, 36) relative to said center of gravity (A) in the forward and backward direction (L), the width direction (W) and the upward and downward direction (H) of the engine (26) are respectively set as $l_1, w_1, h_1, l_2, w_2, h_2, l_3, w_3, h_3$, and the spring constants in the forward and backward direction (L), the width direction (W) and the upward and downward direction (H) of the engine (26) are respectively set as $kl_1, kw_1, kh_1 \; kl_2, kw_2, kh_2, kl_3, kw_3, kh_3$.

2.  A method as claimed in claim 1, wherein said three mounts (32, 34, 36) are disposed in such positions as to satisfy both $h_1 + h_2 + h_3 = 0$ and $l_1 + l_2 + l_3 = 0$.

3. A method as claimed in claim 1, wherein respective positions of said three mounts (32, 34, 36) are determined preferentially, on the basis of which the spring constants of said three mounts are determined.

4. A method as claimed in claim 1, wherein the spring constants of said three mounts (32, 34, 36) are determined preferentially, on the basis of which the positions of said three mounts are determined.

5. A structure of supporting an assembly (30) of an engine (26) and a transmission (28) on a vehicle body (50) by three or four mounts (32, 34, 36; 38, 40, 42, 44) each having spring functions in the forward and backward direction (L), the width direction (W) and upward and downward direction (H) of the engine (26),
wherein said mounts being disposed within a plane (PL) passing through the center of gravity (G) of said assembly (30) or its neighborhood such that a triangle or a quadrangle formed by the mounts encloses the center of gravity (G) of said assembly (30), **characterized in that** the positions and the spring constants of
said mounts (32, 34, 36; 38, 40, 42, 44) are determined such that the vibration in the forward and backward direction (L) of the engine (26) applied to said mounts and the vibration in the pitching direction (P) of the engine (26) applied to said mounts are not coupled; the vibration in the forward and backward direction (L) of the engine (26) applied to said mounts and the vibration in the yawing direction (Y) of the engine (26) applied to said mounts are not coupled; the vibration in the width direction (W) of the engine (26) applied to said mounts and the vibration in the rolling direction (R) of the engine (26) applied to said mounts are not coupled; the vibration in the width direction (W) of the engine (26) applied to said mounts and the vibration in the yawing direction (Y) of the engine (26) applied to said mounts are not coupled; the vibration in the upward and downward direction (H) of the engine (26) applied to said mounts and the vibration in the pitching direction (P) of the engine (26) applied to said mounts are coupled; and the vibration in the upward and downward direction (H) of the engine (26) applied to said mounts and the vibration in the rolling direction (R) of the engine (26) applied to said mounts are not coupled.

6. A structure as claimed in claim 5, wherein said plane (PL) passing through said center of gravity (G) or its neighborhood substantially coincides with a vertical plane including the principal axis of inertia (60) of said engine (26).

7. A structure as claimed in claim 6, wherein said assembly (30) is installed in the front portion of the vehicle body (50) such that the rotational axis of a crankshaft extends in the width direction (WB) of the vehicle body.

8. A structure as claimed in claim 5, wherein said plane (PL) passing through said center of gravity (G) or its neighborhood is selected to be placed between a vertical plane including the principal axis of inertia (60) of the moment of inertia of said assembly (30) as viewed in the direction of the principal axis of inertia of said engine (26) and a vertical plane including the torque roll axis (62) of said assembly.

9. A structure as claimed in claim 5, wherein the number of said mounts (32, 34, 36) is three.

10. A structure as claimed in claim 9, wherein two of said three mounts (32, 34, 36) are placed above said center of gravity (G), while the remaining one is placed below said center of gravity (G).

11. A structure as claimed in claim 9, wherein two of said three mounts (32, 34, 36) are placed below said center of gravity (G) while the remaining one is placed above said center of gravity (G).

12. A structure as claimed in claim 5, wherein the number of said mounts (38, 40, 42, 44) is four, of which two are placed above said center of gravity (G), while the remaining two are placed below said center of gravity (G).

**Patentansprüche**

1. Verfahren zum Stützen einer Baugruppe (30) eines Motors (26) und eines Getriebes (28) an einer Fahrzeugkarosserie (50) durch Anordnen von drei Trägern (32, 34, 36), die jeweils Federfunktionen in nach vorn gerichtete und nach hinten gerichtete Richtung (L), die Breitenrichtung (W) und die nach oben gerichtete und nach unten gerichtete Richtung (H) des Motors (26) haben, innerhalb einer durch den Schwerpunkt (G) der Baugruppe (30) oder dessen Umgebung hindurchtretende Ebene (PL) und durch Anordnen des Schwerpunkts (G) innerhalb des durch die drei Träger ausgebildeten Dreiecks zum Stützen der Baugruppe (30),
**gekennzeichnet durch**
Ermitteln der Positionen der drei Träger (32, 34, 36) und der Federkonstanten, um die folgenden drei Gleichungen zu erfüllen:

$$\begin{bmatrix} l_1 & l_2 & l_3 \\ h_1 & h_2 & h_3 \end{bmatrix} \begin{bmatrix} kw_1 \\ kw_2 \\ kw_3 \end{bmatrix} = 0$$

$$\begin{bmatrix} w_1 & w_2 & w_3 \\ h_1 & h_2 & h_3 \end{bmatrix} \begin{bmatrix} kl_1 \\ kl_2 \\ kl_3 \end{bmatrix} = 0$$

$$\begin{bmatrix} w_1 & w_2 & w_3 \end{bmatrix} \begin{bmatrix} kh_1 \\ kh_2 \\ kh_3 \end{bmatrix} = 0$$

wobei die Positionen der drei Träger (32, 34, 36) relativ zu dem Schwerpunkt (G) in nach vorn gerichtete und nach hinten gerichtete Richtung (L), die Breitenrichtung (W) und die nach oben gerichtete und nach unten gerichtete Richtung (H) des Motors (26) jeweils zu $l_1$, $w_1$, $h_1$; $l_2$, $w_2$, $h_2$; $l_3$, $w_3$, $h_3$; gesetzt sind, und die Federkonstante in die nach vorn gerichtete und nach hinten gerichtete Richtung (L), die Breitenrichtung (W) und die nach oben gerichtete und nach unten gerichtete Richtung (H) des Motors (26) jeweils zu $kl_1$, $kw_1$, $kh_1$; $kl_2$, $kw_2$, $kh_2$; $kl_3$, $kw_3$, $kh_3$; gesetzt sind.

2. Verfahren gemäß Anspruch 1, wobei die drei Träger (32, 34, 36) an solchen Positionen angeordnet sind, so dass sowohl h1 + h2 + h3 = 0 als auch $l_1$ + $l_2$ + $l_3$ = 0 erfüllt ist.

3. Verfahren gemäß Anspruch 1, wobei jeweilige Positionen der drei Träger (32, 34, 36) vorzugsweise auf der Grundlage ermittelt werden, auf der die Federkonstanten der drei Träger ermittelt wird.

4. Verfahren gemäß Anspruch 1, wobei die Federkonstanten der drei Träger (32, 34, 36) vorzugsweise auf der Basis ermittelt werden, auf der die Positionen der drei Träger ermittelt werden.

5. Aufbau zum Stützen einer Baugruppe (30) eines Motors (26) und eines Getriebes (28) an einer Fahrzeugkarosserie (50) durch drei oder vier Träger (32, 34, 36; 38, 40 ,42, 44), die jeweils Federfunktionen in die nach vorn gerichtete und nach hinten gerichtete Richtung (L) die Breitenrichtung (W) und die nach oben und nach unten gerichtete Richtung (H) des Motors (26) haben, wobei
die Träger innerhalb einer durch den Schwerpunkt (G) der Baugruppe (30) oder seine Umgebung hindurchtretende Ebene (PL) angeordnet sind, so dass ein durch die Träger ausgebildetes Dreieck oder Viereck den Schwerpunkt (G) der Baugruppe (30) einschließt,
**dadurch gekennzeichnet, dass**
die Positionen und die Federkonstanten der Träger (32, 34, 36; 38, 40, 42, 44) so ermittelt sind, dass die Schwingung in die nach vorn gerichtete und nach hinten gerichtete Richtung (L) des Motors (26), die auf die Träger aufgebracht wird, und die Schwingung in die Kipprichtung (P) des Motors (26), die auf die Träger aufgebracht wird, nicht gekoppelt sind; die Schwingung in die nach vorn gerichtete und nach hinten gerichtete Richtung (L) des Motors (26), die auf die Träger aufgebracht wird, und die Schwingung in Gierrichtung (Y) des Motors (26), die auf die Träger aufgebracht wird, nicht gekoppelt sind; die Schwingung in die Breitenrichtung (W) des Motors (26), die auf die Träger aufgebracht wird, und die Schwingung in die Rollrichtung (R) des Motors (26), die auf die Träger aufgebracht wird, nicht gekoppelt sind; die Schwingung in die Breitenrichtung (W) des Motors (26), die auf die Träger aufgebracht wird, und die Schwingung in die Gierrichtung (Y) des Motors (26), die auf die Träger aufgebracht wird, nicht gekoppelt sind; die Schwingung in die nach oben gerichtete und nach unten gerichtete Richtung (H) des Motors (26), die auf die Träger aufgebracht wird, und die Schwingung in die Kipprichtung (P) des Motors (26), die auf die Träger aufgebracht wird, gekoppelt sind; und die Schwingung in die nach oben und die nach unten gerichtete Richtung (H) des Motors (26), die auf die Träger aufgebracht wird, und die Schwingung in die Rollrichtung (R) des Motors (26), die auf die Träger aufgebracht wird, nicht gekoppelt sind.

6. Aufbau gemäß Anspruch 5, wobei die durch den Schwerpunkt (G) oder seine Umgebung hindurchtretende Ebene (PL) im Wesentlichen mit einer vertikalen Ebene zusammenfällt, die die Hauptträgheitsachse (60)des Motors (26) einschließt.

7. Aufbau gemäß Anspruch 6, wobei die Baugruppe (30) an dem Vorderabschnitt der Fahrzeugkarosserie (50) eingebaut ist, so dass die Drehachse einer Kurbelwelle sich in die Breitenrichtung (WB) der Fahrzeugkarosserie erstreckt.

8. Aufbau gemäß Anspruch 5, wobei die durch den Schwerpunkt (G) oder seine Umgebung hindurchtretende Ebene (PL) ausgewählt ist, um zwischen einer vertikalen Ebene, die die Hauptträgheitsachse (60) des Trägheitsmoments der Baugruppe (30) mit Sicht in Richtung der Hauptträgheitsachse des Motors (26) einschließt, und einer vertikalen Ebene, die die Drehmomentrollachse (62) der Baugruppe einschließt, angeordnet ist.

9. Aufbau gemäß Anspruch 5, wobei die Anzahl der Träger (32, 34, 36) drei beträgt.

10. Aufbau gemäß Anspruch 9, wobei zwei der Träger (32, 34, 36) oberhalb des Schwerpunkts (G) angeordnet sind, während der Verbleibende unterhalb des Schwerpunkts (G) angeordnet ist.

11. Aufbau gemäß Anspruch 9, wobei zwei der Träger (32, 34, 36) unterhalb des Schwerpunkts (G) angeordnet sind, während der Verbleibende oberhalb des Schwerpunkts (G) angeordnet ist.

12. Aufbau gemäß einem Anspruch 5, wobei die Anzahl der Träger (38, 40, 42, 44) vier beträgt, von denen zwei oberhalb des Schwerpunkts (G) angeordnet sind, während die übrigen zwei unterhalb des Schwerpunkt (G) angeordnet sind.

**Revendications**

1. Méthode pour supporter un ensemble (30) d'un moteur (26) et d'une transmission (28) sur une carrosserie de véhicule (50) en disposant trois montures (32, 34, 36) ayant chacune des fonctions de ressort suivant la direction vers l'avant et vers l'arrière (L), suivant la direction de largeur (W) et suivant la direction vers le haut et vers le bas (H) du dit moteur (26) dans un plan passant par le centre de gravité (G) du dit ensemble (30) ou par son voisinage, et en plaçant le dit centre de gravité (G) dans le triangle formé par les dites trois montures pour supporter le dit ensemble (30), **caractérisée par**
la détermination des positions des dites trois montures (32, 34, 36) et des constantes de rappel de manière qu'elles satisfassent aux trois formules suivantes

$$\begin{vmatrix} l_1 & l_2 & l_3 \\ h_1 & h_2 & h_3 \end{vmatrix} \begin{vmatrix} kw_1 \\ kw_2 \\ kw_3 \end{vmatrix} = 0$$

$$\begin{vmatrix} w_1 & w_2 & w_3 \\ h_1 & h_2 & h_3 \end{vmatrix} \begin{vmatrix} kl_1 \\ kl_2 \\ kl_3 \end{vmatrix} = 0$$

$$\begin{vmatrix} w_1 & w_2 & w_3 \end{vmatrix} \begin{vmatrix} kh_1 \\ kh_2 \\ kh_3 \end{vmatrix} = 0$$

où les positions des dites trois montures (32, 34, 36) par rapport au dit centre de gravité (G) suivant la direction vers l'avant et vers l'arrière (L), suivant la direction de largeur (W) et suivant la direction vers le haut et vers le bas (H) du moteur (26) sont respectivement fixées pour être $l_1$, $w_1$, $h_1$, $l_2$, $w_2$, $h_2$, $l_3$, $w_3$, $h_3$, et les constantes de rappel suivant la direction vers l'avant et vers l'arrière (L), suivant la direction de largeur (W) et suivant la direction vers le haut et vers le bas (H) du moteur (26) sont respectivement fixées pour être $kl_1$, $kw_1$, $kh_1$, $kl_2$, $kw_2$, $kh_2$, $kl_3$, $kw_3$, $kh_3$.

2. Méthode selon la revendication 1, dans laquelle les dites trois montures (32, 34, 36) sont disposées dans des positions qui satisfont simultanément à

$$h_1 + h_2 + h_3 = 0 \text{ et } l_1 + l_2 + l_3 = 0$$

3. Méthode selon la revendication 1, dans laquelle les positions respectives des dites trois montures (32, 34, 36) sont déterminées préférentiellement, sur la base de laquelle sont déterminées les constantes de rappel des dites trois montures.

4. Méthode selon la revendication 1, dans Laquelle les constantes de rappel des dites trois montures (32, 34, 36) sont déterminées préférentiellement, sur la base de laquelle sont déterminées les positions des dites trois montures.

5. Structure pour supporter un ensemble (30) d'un moteur (26) et d'une transmission (28) sur une carrosserie de véhicule (50) au moyen de trois ou quatre montures (32, 34, 36 ; 38, 40, 42, 44) ayant chacune des fonctions de ressort suivant la direction vers l'avant et vers l'arrière (L), suivant la direction de largeur (W) et suivant la direction vers le haut et vers le bas (H) du moteur (26), dans laquelle les dites montures sont disposées dans un plan (PL) passant par le centre de gravité (G) du dit ensemble (30) ou par son voisinage, de telle sorte qu'un triangle ou un quadrilatère formé par les montures circonscrive le centre de gravité (G) du dit ensemble (30), **caractérisée en ce que** les positions et les constantes de rappel des dites montures (32, 34, 36 ; 38, 40, 42, 44) sont déterminées de telle sorte que les vibrations suivant la direction vers l'avant et vers l'arrière (L) du moteur (26) appliquées sur les dites montures, et les vibrations suivant la direction de tangage (P) du moteur (26) appliquées sur les dites montures ne sont pas couplées ; les vibrations suivant la direction vers l'avant et vers l'arrière (L) du moteur (26) appliquées sur les dites montures, et les vibrations suivant la direction de lacet (Y) du moteur (26) appliquées sur les dites montures ne sont pas couplées ; les vibrations suivant la direction de largeur (W) du moteur (26) appliquées sur les dites montures, et les vibrations suivant la direction de roulis (R) du moteur (26) appliquées sur les dites montures ne sont pas couplées ; les vibrations suivant la direction de largeur (W) du moteur (26) appliquées sur les dites montures, et les vibrations suivant la direction de lacet (Y) du moteur (26) appliquées sur les dites montures ne sont pas couplées ; les vibrations suivant la direction vers le haut et vers le bas (H) du moteur (26) appliquées sur les dites montures, et les vibrations suivant la direction de tangage (P) du moteur (26) appliquées sur les dites montures sont couplées ; et les vibrations suivant la direction vers le haut et vers le bas (H) du moteur (26) appliquées sur les dites montures, et vibrations suivant la direction de roulis (R) du moteur (26) appliquées sur les dites montures ne sont pas couplées.

6. Structure selon la revendication 5, dans laquelle le dit plan (PL) passant par le centre de gravité (G) du dit ensemble (30) ou par son voisinage coïncide sensiblement avec un plan vertical incluant l'axe principal d'inertie (60) du dit moteur (26).

7. Structure selon la revendication 6, dans laquelle le dit ensemble (30) est installé dans la partie avant de la carrosserie de véhicule (50) de telle sorte que l'axe de rotation d'un vilebrequin s'étend suivant la direction de largeur (WB) de la carrosserie de véhicule.

**8.** Structure selon la revendication 5, dans laquelle le dit plan (PL) passant par le centre de gravité (G) du dit ensemble (30) ou par son voisinage est sélectionné pour être placé entre un plan vertical incluant l'axe principal d'inertie (60) du moment d'inertie du dit ensemble (30) en regardant suivant la direction de l'axe principal d'inertie du dit moteur (26) et un plan vertical incluant l'axe de roulis de couple (52) du dit ensemble.

**9.** Structure selon la revendication 5, dans laquelle le nombre des dites montures (32, 34, 36) est de trois.

**10.** Structure selon la revendication 9, dans laquelle deux des dites trois montures (32, 34, 36) sont placées au-dessus du dit centre de gravité (G), celle restante étant placée au-dessous du dit centre de gravité (G).

**11.** Structure selon la revendication 9, dans laquelle deux des dites trois montures (32, 34, 36) sont placées au-dessous du dit centre de gravité (G), celle restante étant placée au-dessus du dit centre de gravité (G).

**12.** Structure selon la revendication 5, dans laquelle le nombre des dites montures (38, 40, 42, 44) est de quatre, dont deux sont placées au-dessus du dit centre de gravité (G), les deux autres étant placées au-dessous du dit centre de gravité (G).

# FIG.1

# FIG.2

EP 0 891 886 B1

# FIG.3

# FIG.4

# FIG.5

FIG.6A

FIG.6B

FIG.6C

FIG.7A

FIG.7B

## FIG.8

FORWARD

## FIG.9